# EUROPEAN PATENT SPECIFICATION

(11) **EP 2 849 485 B1**
(45) Date of publication and mention of the grant of the patent: **05.04.2017**
(21) Application number: 13290216.4
(22) Date of filing: 12.09.2013
(51) Int. Cl.: H04W 28/08, H04W 72/12, H04W 88/08, H04W 92/20

(54) **Scheduler virtualization for mobile cloud for high latency backhaul**
Ablaufsteuerungsvirtualisierung für mobile Cloud für hochlatenten Backhaul
Virtualisation d'ordonnanceur pour nuage mobile de liaison terrestre à haute latence

(43) Date of publication of application: 18.03.2015
(73) Proprietor: ALCATEL LUCENT, 92100 Boulogne-Billancourt (FR)
(72) Inventor: Haberland, Bernd, 70435 Stuttgart (DE); Grob-Lipski, Heidrun, 70435 Stuttgart (DE); Werthmann, thomas, 70374 Sturrgart (DE)
(74) Representative: Wetzel, Emmanuelle

(56) References cited:
- EP-A1- 2 592 863
- JP-A- 2012 147 125
- US-A1- 2013 163 533
- BERND HABERLAND ET AL: "Radio Base Stations in the Cloud", BELL LABS TECHNICAL JOURNAL, vol. 18, no. 1, 30 June 2013 (2013-06-30), pages 129-152, XP055098994, ISSN: 1089-7089, DOI: 10.1002/bltj.21596
- CMCC ET AL: "Application of BBU+RRU based CoMP system to LTE-Advanced", 3GPP DRAFT; R1-084612, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081118, 18 November 2008 (2008-11-18), XP050317843, [retrieved on 2008-11-18]

## Description

### Technical Field

The disclosure relates to telecommunication systems, and more particularly to a Scheduler Virtualization for Mobile Cloud for High Latency Backhaul.

### Background

Mobile Cloud radio access network (RAN) environments consist of several cooperating MultiSite MultiStandard baseband units that manage the baseband processing for different clusters of Remote Radio Heads with pooling capability using a centralized scheduling structure. In addition, one of the key points to be considered in studying the performance of the cloud RAN is the characteristics of the high latency backhaul link which connects the cloud RAN nodes. This is because, the effectiveness of each cloud RAN scheme is dependent on whether the information can be transmitted in time among the nodes to be complaint with the Harq timing.

BELL LABS TECHNICAL JOURNAL, vol. 18, no. 1, 30 June 2013, pages 129-152 discloses radio base stations in the cloud.

JP 2012 147125 A discloses a wireless communication method with wireless base station devices.

### Summary

Various embodiments provide for an improved baseband assembly, an improved method and a computer program product as described by the subject matter of the independent claims. Advantageous embodiments are described in the dependent claims.

The term "channel" or "bearer" as used herein refers to an over-the-air, wireless transmission path in a network (such as a RAN) and is used to carry user (e.g. user equipment) data traffic.

The term "user data processor" (UP) as used herein refers to various functions or algorithms to process a complete layered stack of user processing in the related radio access technology.

The term "user" as used herein refers for example to a user equipment (UE) or a portable or mobile device capable of wireless communication, a portable or mobile communication device capable of wireless communication, a mobile phone, a cellular phone, a laptop or notebook computer capable of wireless communication, a PDA capable of wireless communication, a handheld device capable of wireless communication, or the like.

The term "latency link" refers to a round trip time (RTT) delay in the transmission, over the link, of data from the source of the data and the reception of an acknowledgment at the source.

The term "high latency" as used herein refers to a latency value larger than a predetermined maximum allowed transport delay within a network (e.g. RAN) of the cellular communication system. For example, the maximum allowed transport delay may be defined by a provider of the network.

The term "HARQ" stands for Hybrid Automatic Repeat Request.
The term "ACK" stands for acknowledgment.
The term "NACK" stands for negative or non-acknowledgment.
The term "CCE" stands for Control Channel Element.
The term "Mu-MIMO" stands for multi-user multiple-input and multiple-output.
The term "DL" stands for downlink.
The term "UL" stands for uplink.
The term "E2E" stands for end to end.

Some embodiments provide a baseband processing assembly comprising at least a first and second baseband unit linked via a high latency backhaul link, wherein the first base band unit is operable for processing signals of at least one remote radio head, the at least one remote radio head serving a radio cell of a cellular communication system, the first baseband unit comprising a first set of user packet schedulers and a first partial cell packet scheduler, wherein the first partial cell packet scheduler is associated to the radio cell, wherein the first set of user packet schedulers are assigned to a first group of users associated to the radio cell, the second baseband unit comprising a second set of user packet schedulers and a second partial cell packet scheduler, wherein the second partial cell packet scheduler is associated to the radio cell, wherein the second set of user packet schedulers are assigned to a second group of users associated to the radio cell, wherein a first user packet scheduler of the first set of user packet schedulers and the first partial cell packet scheduler are operable to exchange data for providing first resource assignment information and establishing a first channel with a first user of the first group of users using the first resource assignment information, wherein a second user packet scheduler of the second set of user packet schedulers and the second partial cell packet scheduler are operable to exchange data for providing second resource assignment information and establishing a second channel with a second user of the second group of users using the second resource assignment information.

According to one embodiment, the first set of user packet schedulers may be executed on a respective first set of processing elements of the first BBU.

According to one embodiment, the second set of user packet schedulers may be executed on a respective second set of processing elements of the first BBU.

The first (second) set of user packet schedulers are assigned to the first (second) group of users associated to the radio cell for serving the first (second) group of users.

For example, the first and second resource assignment information may be provided and/or used for the established first and second channel respectively.

The first and second set of user packet schedulers may be created as instances of same or different user packet schedulers. An instance may be created as soon as a user of the first or second group of users is connected to the RRH.

These features may be advantageous as they may prevent multiple interconnections that would otherwise be required in case of a centralized scheduler that is connected to de-centralized user processing parts (the user processing part may process user data other than scheduling of resources e.g. encoding/decoding of data received from a user at baseband unit). For example, the centralized scheduler may require a high number of interactions to the user processing parts such as for obtaining scheduling information from the users. These interactions may cause an add-on latency.

These features may provide a load balancing and/or distributing capability for any conventional central scheduler function among user schedulers within a baseband unit or among baseband units. Such distribution or balancing may allow a parallel or interleaved execution of the distributed schedulers that may speed up the whole scheduling process. For example, a multi-threading execution of the user schedulers may be provided either on single or multiple processing elements.

These features may provide a scheduling based virtualization which may achieve higher pooling gains due to its finer granularity. This may guarantee a better utilization of the processing elements within a baseband processing assembly.

Another advantage may be that the processing load of a cell scheduler within the home BBU i.e. first BBU is significantly decreased as it shares the scheduling with remote cell packet schedulers in remote BBUs i.e. second BBU.

These features may allow uplink and downlink radio signals of the radio cell to be simultaneously scheduled on at least one processing element, thereby maximizing utilization of the processing resources and supporting a flexible processing resource allocation strategy.

According to one embodiment, the first set of user packet schedulers execute respective first scheduling functions on a respective set of processing elements of the first baseband unit. The first scheduling functions comprise the exchange of data and the provision of the first resource assignment information with the first partial cell packet scheduler.

According to one embodiment, the second set of user packet schedulers execute respective second scheduling functions on a respective set of processing elements of the second baseband unit. The second scheduling functions comprise the exchange of data and the provision of the second resource assignment information with the second partial cell packet scheduler.

These features may provide a load balancing and/or distributing capability for any conventional central scheduler function among processing elements within a baseband unit or among baseband units.

According to one embodiment, the first partial cell packet scheduler is operable to partition resources assigned to the radio cell into at least two resource partitions and assign a resource partition of the at least two resource partitions to the second partial cell packet scheduler.

According to one embodiment, the second partial cell packet scheduler is operable to receive a resource partition information indicative of a resource partition of the resources of the radio cell from the first partial cell packet scheduler, wherein the resource partition comprises a plurality of resource blocks in time and frequency domains, wherein the second resource assignment information is indicative of at least part of the plurality of the resource blocks to be assigned to the second channel.

These embodiments may be advantageous as they may provide a coordinated scheduling of the radio cell resources so as to avoid any potential system coincidence or collision due to a mis-scheduling of resources, by collision of available resources.

According to one embodiment, the base band processing assembly further comprises a load distributer operable to assign processing tasks of the first user and the second user to a respective first and second user data processor of the first and second baseband unit.

This may be advantageous as it may provide a combined scheduling as well as user processing virtualization. For example, the user related scheduling functions are subject of virtualization as the user processing functions, and may be placed together at the same processing resource elements.

According to one embodiment, the load distributer is further operable to assign the first user data processor and user packet scheduler to a first processing element of the first BBU. That is, the functions of the user data processor and the user packet scheduler may be executed on the first processing element.

According to one embodiment, the assignment of the second user packet scheduler to the second user is performed based on at least one of the offloading conditions:
End-to-end delay for RAN part of the end to end data transmission on the second channel is higher than the expected latency of the high latency link;
coherence time for the channel of the second user is larger than the expected latency of the high latency link;
velocity of the second user is higher than a preset maximum velocity value.

For example, the velocity of the second user is higher than 30km/h, or higher than 50km/h. In the high velocity case, the coherence time for the channel is so short that the frequency selective scheduling is not possible and a frequency divers scheduling may be performed instead.

In order to cope with the rigid latency situations only users or channels carrying applications with larger allowed E2E delays or static or only very slow moving and fast moving mobiles should be selected for offloading (i.e. assigning a user to a remote BBU e.g. second BBU) by the load distributer. Applications with larger E2E delays are giving more flexibility in the partial cell scheduling process in the time and frequency domain. For Static and slow moving users (as the majority of the mobiles) the CSI is more accurate in context of backhauling latencies. For fast moving users the CSI is not all stable and only a wideband CQI can be applied without frequency selective scheduling.

According to one embodiment, the first and second resource assignment information are provided according to at least one radio access technology. This embodiment may be advantageous as it may be seamlessly integrated in existing systems.

According to one embodiment, the first user packet scheduler is operable to receive scheduling conditions information for the first user; process the received scheduling conditions information, thereby determining modulation and coding schemes and antenna selection for data transmission on the first channel; send to the first partial cell scheduler a resource message indicative of the modulation and coding schemes and antenna selection; receive a response from the first partial cell scheduler indicative of radio resource blocks information for the first channel and a confirmation of the determined MCS and antenna selection; wherein the first resource assignment information comprises the MCS, antenna selection and the radio resource blocks information. The second user packet scheduler may also be operable to perform the steps of this embodiment for the second user.

This may be advantageous as it may provide a coherent resource scheduling and thus a reliable scheduling of resources for the users of the telecommunication cellular system.

According to one embodiment, the first user packet scheduler is further operable to determine processing resources required for establishing the first channel using the resource assignment information; send a resource request message to a Local Resource Manager, LRM, of the first baseband processing unit indicative of the determined processing resources; receive a resource grant message from the LRM.

This may be advantageous as it may provide a defense mechanism to protect against processing overload.

According to one embodiment, the first partial cell packet scheduler is operable to receive an allocation priority of each user of the first group of users from a respective assigned user packet scheduler of the first set of user packet schedulers;
sort the first group of users by the allocation priority; in response to a determination that available radio resources are not sufficient for the first group of users, selecting a subgroup of users of the first group of users having lowest allocation priority and perform one of: excluding users of the subgroup; modifying the modulation and coding schemes for the subgroup of users; modifying the antenna selection for the subgroup of users.

According to one embodiment, in case the first channel is a downlink channel, the received scheduling conditions information comprises a channel state information, CSI, including a channel quality indicator, CQI, of the first user, precoding matrix indicator ,PMI and a ranking indicator, a negative acknowledgement, NACK, indicator in case of needed retransmission, Quality of Experience, QoE, metrics comprising each a performance characteristic for the first channel ; and an Radio Link Control, RLC, buffer size of the first channel.

According to one embodiment, in case the first channel is an uplink channel, the received scheduling information comprises a CSI including a CQI of the first user, PMI, rank indicator, NACK indicator in case of needed retransmission, scheduling request for at least one uplink component carrier, and a buffer status report of the first user.

According to one embodiment, the second baseband unit is operable to relax a HARQ round trip time for performing a HARQ process on the second channel based on the latency of the high latency backhaul link, wherein the second scheduling and user data processing of the second channel is performed before the first scheduling and user data processing of the first channel on the relaxed HARQ round trip time.

This may be advantageous as it may keep the 8 HARQ processes allowed per UE and this 8 processes can be used during this adapted roundtrip time.

According to one embodiment, in case the second channel is an uplink channel, the first base band unit is further adapted to send a forced acknowledgment message upon receiving a data packet from the second user, wherein the forced acknowledgment message is sent before the data packet reaches the second baseband unit and within the HARQ round trip time.

The fact that an ACK/NACK from the remote (second) BBU may come too late (due to high latency link), the user may perform a retransmission, although it is not yet known if the data have been received correctly or not. This unnecessary retransmission may occupy radio resources that could be used for the scheduling of other users. This embodiment solves this by a forced ACK mechanism for the Remote BBUs in order to avoid user retransmissions.

Various embodiments relate to method in a baseband processing assembly comprising at least a first and second baseband unit linked via a high latency backhaul link, wherein the first base band unit is operable for processing signals of at least one remote radio head, the at least one remote radio head serving a radio cell of a cellular communication system, the first baseband unit comprising a first set of user packet schedulers and a first partial cell packet scheduler, wherein the first partial cell packet scheduler is associated to the radio cell, wherein the first set of user packet schedulers are assigned to a first group of users associated to the radio cell, the second baseband unit comprising a second set of user packet schedulers and a second partial cell packet scheduler, wherein the second partial cell packet scheduler is associated to the radio cell, wherein the second set of user packet schedulers are assigned to a second group of users associated to the radio cell, the method comprising exchanging data between a first user packet scheduler of the first set of user packet schedulers and the first partial cell packet scheduler; providing first resource assignment information; establishing a first channel with a first user of the first group of users using the first resource assignment information, exchanging data between a second user packet scheduler of the second set of user packet schedulers and the second partial cell packet scheduler; providing second resource assignment information and establishing a second channel with a second user of the second group of users using the second resource assignment information.

Various embodiments relate to a computer program product comprising computer executable instructions to perform the method steps of the method of the preceding embodiment.

It is understood that one or more of the aforementioned embodiments may be combined as long as the combined embodiments are not mutually exclusive.

### Brief description of the drawings

In the following embodiments of the invention are explained in greater detail, by way of example only, making reference to the drawings in which:
Fig. 1 schematically shows a functional block diagram of an exemplary baseband processing assembly,
Fig. 2 schematically shows a functional block diagram of another exemplary baseband processing assembly,
Fig. 3 is a flowchart for a method for scheduling downlink data,
Fig. 4 shows a DL scheduling process with a message sequence chart,
Fig. 5 shows a first example of a UL scheduling process with a message sequence chart,
Fig. 6 shows a second example of a UL scheduling process with a message sequence chart,
Fig. 7 is a HARQ timing diagram for downlink data, and
Fig. 8 is a HARQ timing diagram for uplink data.

### Detailed description

In the following, like numbered elements in these figures are either similar elements or perform an equivalent function. Elements which have been discussed previously will not necessarily be discussed in later figures if the function is equivalent.

The present disclosure describes a distributed scheduling architecture for the Mobile Cloud based on a virtualization concept on a scheduler basis. The method may consist of a split of the scheduler into the user and cell related functions, where the user related scheduling functions are subject of virtualization as well as the user processing functions and placed to the same processing resources. The cell scheduler may be split into partial cell schedulers located at home and any remote BBU.

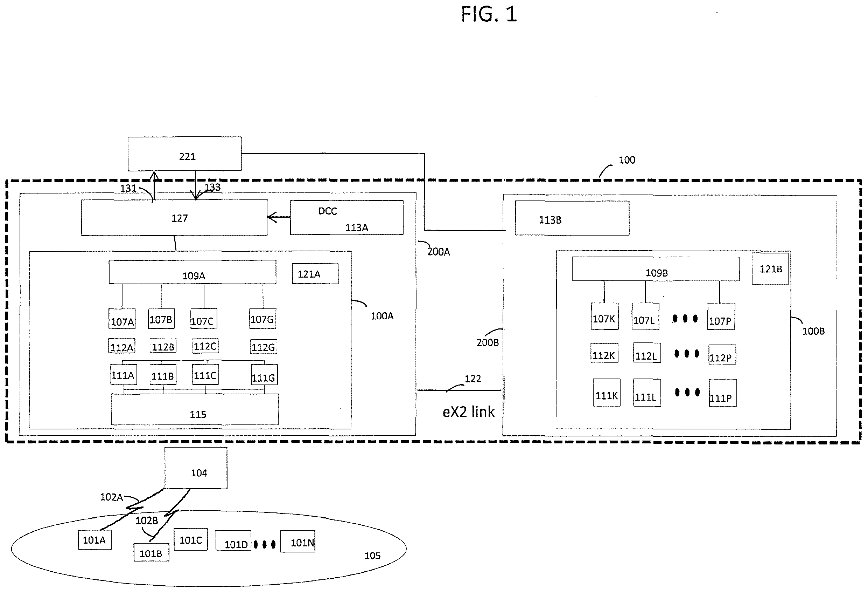

FIG. 1 schematically shows a functional block diagram of an exemplary baseband processing assembly 100. The baseband processing assembly 100 may comprise a home and remote BBU 100A and 100B. The home BBU 100A may not be spatially collocated with the remote BBU 100B and connected to each other via a high latency backhaul link 122. The backhaul link 122 may be an extended X2 link to be defined by 3GPP. The home BBU 100A may be part of a baseband apparatus 200A, and the remote BBU 100B may be part of a baseband apparatus 200B.

The home BBU 100A may be connected to at least one remote radio head (RRH) 104. The at least one RRH 104 serves a radio cell 105 of a cellular communication system, such as an UMTS or LTE system or a combination thereof. The at least one RRH 104 may provide the transmitter (Tx), Power Amplifier (PA), receiver (Rx) and antenna functions. The at least one RRH 104 and the home BBU 100A are spatially separated with high-speed optical links (low latency links). The RRH 104 may have different output power levels to serve different sized cells such as Macro-, Pico- and Femto-cells and may be installed in indoor- and/or outdoor environments. In the in outdoor Marco-cell scenario the respective RRHs 104 may be driven with relatively high power, whereas in an indoor scenario the respective RRHs 104 may be driven with comparatively low electric power.

The radio cell 105 comprises a group of users 101A-N. The baseband processing assembly 100 may serve for processing baseband or bearer signals of the at least one remote RRH 104. Such signals are transmitted through channels dedicated to the group of users 101A-N.

The home BBU 100A may comprise a set of user packet schedulers 107A-G and a home partial cell packet scheduler 109A. The home partial cell packet scheduler 109A may be assigned to the radio cell 105 in the sense that it may schedule or assign a first part of resources of the radio cell 105. The set of user packet schedulers 107A-G are assigned to the group of users 101A-N for serving them. Assigning the user packet schedulers 107A-G to the group of users 101A-N comprises assigning the user packet schedulers to the channels or bearers associated with the group of users 101A-N. For example, each user packet scheduler may be assigned to a respective user of the group of users 101A-N. For example, the user packet scheduler 107B may be assigned to the user 101A. For example, the user packet scheduler 107B may schedule user related resources to at least one channel 102 linking the user 101A to the RRH 104. The channel 102 may carry data between the user 101A and the RRH 104.

The remote BBU 100B may comprise a set of user packet schedulers 107K-P and a remote partial cell packet scheduler 109B. The remote partial cell packet scheduler 109A may be assigned to the radio cell 105 in the sense that it may schedule or assign a second part of resources of the radio cell 105. The set of user packet schedulers 107K-P are assigned to the group of users 101A-N under the offloading condition that the users or channels are carrying data with larger allowed E2E delays or they are static or only very slow moving and fast moving mobiles. For example, a user packet scheduler may be assigned to a respective user fulfilling said offloading condition of the group of users 101A-N. For example, the user packet scheduler 107K may be assigned to the user 101B. For example, the user packet scheduler 107K may schedule user related resources to at least one channel 102B linking the user 101B to the RRH 104. The channel 102B may carry data between the user 101 B and the RRH 104 with an end-to-end delay for data transmission on the RAN part on the second channel is higher than the expected latency of the high latency link. In addition, coherence time for the channel of the user 101B is larger than the expected latency of the high latency link, and the velocity of the user 101B is higher than a preset maximum velocity value, which may be equal for example to 30km/h or 50km/h depending on the RAN scheme being in use.

For example, the RAN part delay of the end-to-end delay may refer to the time it takes for a packet of data to travel from a source e.g. starting from the link interaction point 131 to the destination plus the time it takes to receive from the destination a reception acknowledgement of the packet of data at the source e.g. arriving at the link point 133.

In this exemplary system, the scheduling virtualization may be realized where a user (or a channel of the user) may be assigned to a user packet scheduler of the set of user packet schedulers 107A-P of the home and remote BBU 100A, 100B.

A physical resource partitioning process may be performed between the partial cell packet schedulers 109A and 109B.

Based on this physical resource partitioning the scheduling can be performed within each BBU. The physical resource partitioning can be done in frequency domain (PRBs) and in time domain (TTIs). Pure frequency or time oriented partitioning may also be used. Each partial cell scheduler gets assigned a portion of the physical resources of the radio cell 105. The partial cell packet schedulers may then freely dispose of those physical resources during its PRB allocation process.

For that end, the home partial cell packet scheduler 109A may act as a master cell packet scheduler while the remote partial cell packet scheduler 109B may act as a slave cell packet scheduler and may communicate to each other as shown in the following diagram

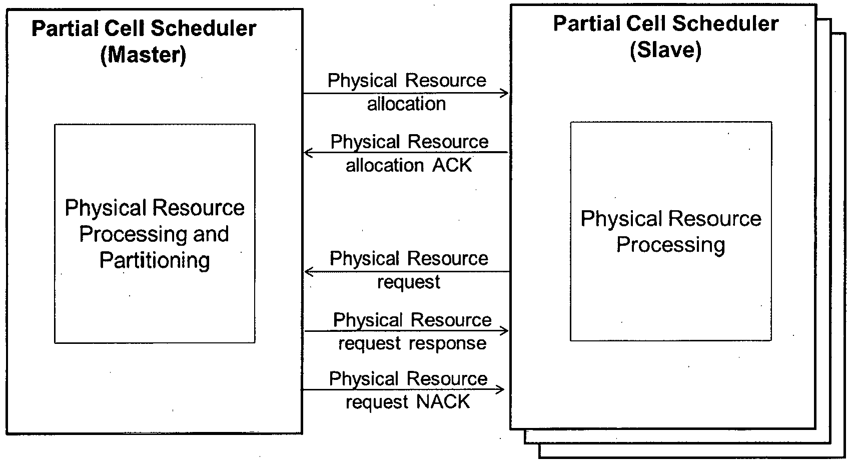

The master partial cell packet scheduler 109A may dispose of a physical resource processing and partitioning algorithm and the slave partial cell packet scheduler 109B may dispose of a physical resource processing algorithm (within the physical processing the slave partial cell packet scheduler may use historical data to check if enough resources are received from the master cell packet scheduler). The physical resource partitioning process is performed in the background and not synchronized to the scheduling processes.

The master partial cell packet scheduler 109A may partition (using historical data indicative of previous resource partitioning) physical resources assigned to the radio cell 105 into two or more resource partitions and assign a resource partition of the two or more resource partitions to the remote partial cell packet scheduler 109B, and may assign the other resource partition to itself. More than two resource partitions may be created by the master cell packet scheduler in case more than one remote BBU is connected to the home BBU.

During cell startup, the master partial cell packet scheduler 109A may send physical resource allocation messages (including the TTI from when the partitioning is valid) to the slave partial cell packet schedulers in order to partition the physical resources according time and frequency among the involved partial cell packet schedulers (e.g. 109A and 109B). The slave partial packet cell scheduler 109B may send a Physical Resource Allocation ACK to acknowledge the partitioning.

In case that allocated resources are not sufficient during scheduling operation phase, the slave partial cell packet scheduler 109B sends to the master partial cell packet scheduler 109A a Physical Resource request in order to modify the Physical Resource partitioning. The master partial cell packet scheduler 109A then sends either a Physical Resource request response message (including the TTI from when the partitioning is valid) with updated Physical resources or a Physical Resource request NACK and the previous resource allocation is valid.

At any time, and in case of a modified resource need, the master partial cell packet scheduler 109A is operable to send a Physical Resource Allocation message in order to change the existing partitioning.
Also the slave partial cell packet scheduler 109B is able to send a Physical Resource request in order to ask for more, less or other physical resources (in time or frequency).

Based on the above physical resource partitioning the scheduling can be performed within each BBU. For example, the master partial cell packet scheduler 109A and the user packet scheduler 107B may mutually exchange data for jointly providing resource assignment information and establishing the channel 102A with the user 101A using the resource assignment information. The resource assignment information may comprise MCS and antenna selection and radio resource blocks (of the partition of resources assigned to the master partial cell packet scheduler 109A) information for data transmission on the channel 102A.

The slave partial cell packet scheduler 109B and the user packet scheduler 107K may mutually exchange data for jointly providing resource assignment information and establishing the channel 102B with the user 101B using the resource assignment information. The resource assignment information may comprise MCS and antenna selection and radio resource blocks (of the partition of resources assigned to slave partial cell packet scheduler 109B) information for data transmission on the channel 102B.

The home BBU 100A may further comprise a set of user data processors 111A-G. A user data processor of the set of user data processors 111A-G may comprise a user processor transmitter (UPTx) and a user processor receiver (UPRx). A user data processor of the set of user data processors 111A-G may be assigned to a user of the group of users 101A-N. For example, the user data processor 111B may be assigned to the user 101A to process, for example, baseband or bearer data transmitted on the channel 102A.

The remote BBU 100B may further comprise a set of user data processors 111K-P. A user data processor of the set of user data processors 111K-P may comprise a user processor transmitter (UPTx) and a user processor receiver (UPRx). A user data processor of the set of user data processors 111 K-P may be assigned to one or more users of the group of users 101A-N fulfilling the offloading conditions described above with respect to scheduler assignment for a remote BBU. For example, the user data processor 111B may be assigned to the user 101B to process, for example, baseband or bearer data transmitted on the channel 102B.

The baseband processing assembly 100 may further comprise a set of processing elements 112A-P to execute for example baseband signal processing of the user data processors 111A-P and/or scheduling functions as defined by the user packets schedulers 107A-P.

The assignment of the user data processors as well as the set of user and partial cell packet schedulers to the users 101A-N may be performed by a load distributer 113A of the home BBU 100A in coordination with a load distributer 113B of the remote BBU 100B. For example, the load distributer 113A may assign the user pack scheduler 107B together with the user data processor 111B to the channel 102A of the user 101A. The functions of the user pack scheduler 107B together with the user data processor 111 B may be allocated to the processing element 112B. Alternatively or in addition, the load distributer 113A may assign a user packet scheduler of the set of user packet schedulers 107A-G together with one or more user data processors of the set of user data processors 111A-G to a user of the group of users 101A-N.

In another example, the load distributer 113A may assign the user pack scheduler 107K together with the user data processor 111K to the channel 102B of the user 101 B if the user 101B is fulfilling the offloading conditions described above. For example, this assignment may be performed after exchanging load information of the remote BBU 100B between the load distributers 113A and 113B. The functions of the user pack scheduler 107K together with the user data processor 111K may be allocated to the processing element 112K. Alternatively or in addition the load distributer 113A may assign more than one user packet schedulers of the set of user packet schedulers 107K-P together with a user data processor of the set of user data processors 111K-P or vice versa to a user of the group of users 101A-N fulfilling the offloading conditions.

For example, the load distributer 113A may assign the set of user packet schedulers 107A-G to the group of users 101A-N by creating the set of user packet schedulers as instances of same or different user packet schedulers. An instance may be created as soon as a user of the group of users is connected to the RRH.

Each of the set of user data processors 111A-M may be regarded as an entity for performing user plane protocol stack processing and/or dedicated control plane protocol stack processing of the respective user specific data. This protocol stack processing is to be separated from cell physical layer (PHY) radio frame processing, wherein user (or channel) specific data is either adapted to a radio frame structure (downlink), or a radio frame structure is decomposed to the plurality of user (or channel) specific data packets or streams (uplink). As an interface between the aforementioned protocol stack processing and PHY cell radio frame processing of the home BBU 100A may further comprise a cell physical layer processor 115 for processing a baseband radio frame structure of a radio frame to or from a radio transceiver of the at least one remote radio head 104 serving the radio cell 105. The cell physical layer processor 115 may be operable to perform one or more processing steps of the group of baseband to-transmission band conversion, transmission band- to-baseband conversion, de-multiplexing, multiplexing, Fast Fourier Transform (FFT), Inverse Fast Fourier Transform (IFFT), Cyclic Prefix Insertion (CPI), Cyclic. Prefix Removal (CPR), spreading, de-spreading, etc.

The home BBU 100A may comprise more than one cell physical layer processor associated to different radio access technologies such as LTE and UMTS. In this case, part of the set of user packet schedulers 107A-M may be assigned to a given radio access technology e.g. LTE and the other part to e.g. UMTS. Thus, the home baseband processing apparatus 200A may also be referred to as Multi site/standard Baseband Units (MSS-BBU).

The home and remote BBU 100A, 100B may further comprise a LRM 121A, 121B respectively for managing their processing resources assigned (or to be assigned) to the set of user packet schedulers 107A-G and 107K-P.

The home BBU 100A may be connected to a Radio Network Controller (RNC), a Mobility Management Entity (MME) and a Serving Gateway (SGW) 121via a Router/Address Dispatcher 127. The router/address dispatcher entity 127 may route the S1-U, S1-MME and lub user or bearer specific packets in a direct way to the BBU 100A.

The home and remote BBU 100A, 100B may be regarded as a hardware module in form of a Digital Signal Processor (DSP), General Purpose Processor (GPP) and/or any hardware accelerator as a Printed Circuit Board (PCB), for example. The processing elements 112A-M may comprise at least one of the GPP, the DSP and the PCB.

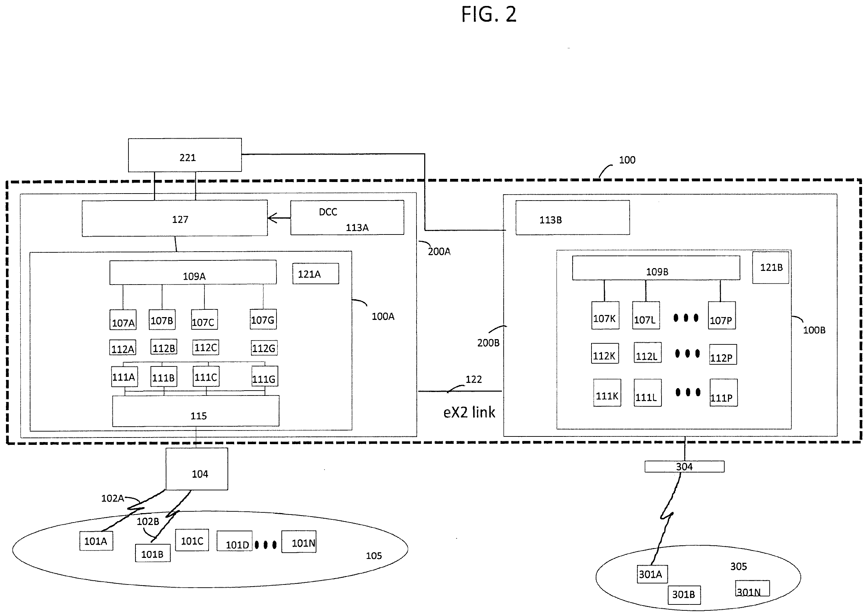

As shown in Fig. 2, in case the radio cell 305 is a pico cell e.g. all-in-one Metro cell comprising users 301A-301N, the first BBU 100A may be seen by users 301A-301N as a remote BBU 100A serving a macro cell 105 and the second BBU 100B may be seen as a home BBU by the users 301-A-N. The architecture shown in Fig. 2 may represent a HetNet system. For the HetNet, part of the traffic in the home BBU 100B may be off-loaded to the remote BBU 100A. The remote BBU 100A acts as a relay for the S1 data of the non-offloaded user packet schedulers 107A-G. The PHYcell entity 115 for LTE may comprise a framer for multiplexing radio frame structures (of e.g. S1 data signals) with the user data processor to/from PHYcell signals of the Remote BBU 100A. Fig. 2 shows an RRH 304 (like the RRH 104) for which the home BBU 100B may process signals. In this case of pico cell served by a home BBU the RRH 304 may be part of the baseband apparatus 200B.

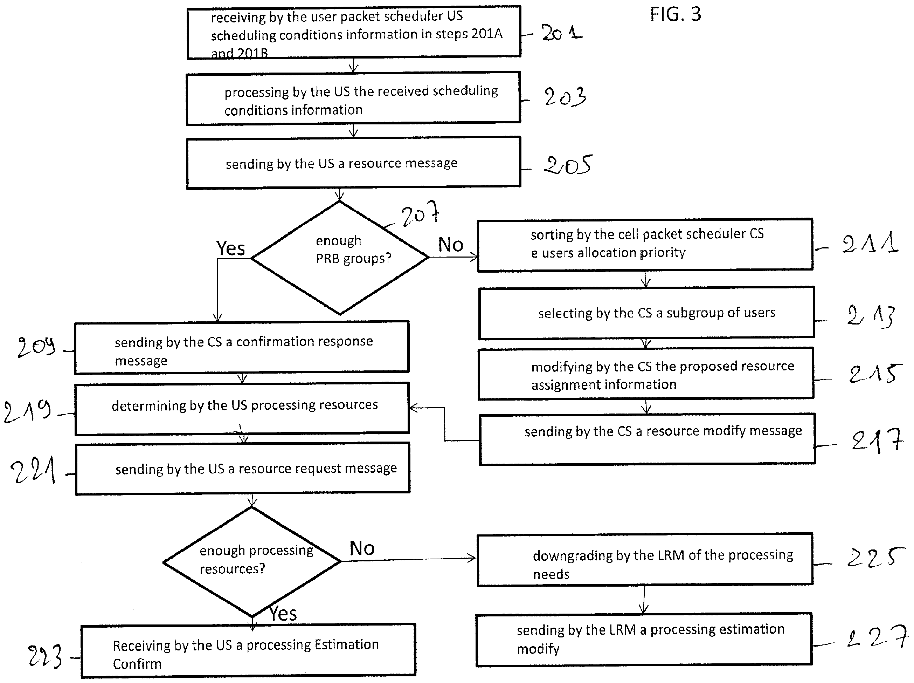

Fig. 3 shows a flowchart for a method for scheduling downlink data e.g. for the channel 102A. The scheduling is jointly coordinated and provided between a user packet scheduler (e.g. 107B) and the home partial cell packet scheduler 109A. The user packet scheduler and the partial cell packet scheduler may be in the same BBU.

For simplicity of the description the scheduling coordination is described in the following between the user packet scheduler 107B and the home partial cell packet scheduler 109A. However, such scheduling coordination is also applied between each of the assigned user packet schedulers to the users and the cell scheduler e.g. between the user packet scheduler 107K that is assigned to user 101 B and the remote partial cell packet scheduler 109B.

The user packet scheduler 107B may receive scheduling conditions information in step 201 for the user 101A. For example, during setup of the channel 102, the user packet scheduler 107B may receive, in step 201A from the LRM 121A associated with the user packet scheduler 107B QCI for the channel 102A. The QCI may comprise for example an authorized minimum bitrate required for achieving the Quality of Service Level of services in case the channel 102A is a GBR channel. The QCI may further comprise a maximum packet error rate required for achieving the Quality of Service Level of services in case the channel 102A is a GBR or NGBR channel. The QCI may further comprise a maximum end to end packet delay from where the allowed RAN latency can be derived. In step 201B, the user packet scheduler 107B may receive from the user processing unit 111B channel state information, CSI, including a channel quality indicator, CQI, PMI and rank indicator for the channel 102A. The user packet scheduler 107B may further receive a negative acknowledgement, NACK, indicator from the user 101A via the user processor unit 111B in case of needed retransmission by the user 101A. The user packet scheduler 107B may further receive from the user data processor 111B QoE metrics comprising a performance characteristic for the channel 102A according to QCI definitions. A QoE metric may comprise for example, an allowed deviation threshold in transmission or reception bitrates. Further, the user packet scheduler 107B may receive from the user data processor 111B used RLC buffer size of the RLC buffer of the user data processor 111B.

In step 203, the user packet scheduler 107B may process the received scheduling conditions information, for example, to obtain a user priority of the user 101A. The user priority may be obtained by comparing for example the current packet delay with the requested delay (indicated by the received QCI) and/or comparing the current bitrate with the minimum authorized bitrate. These comparisons may result in one or more deviation values relative to the requested or recommended values (e.g. as determined by the QoE), and the large the deviation is the high priority is assigned to the user 101A. The processing may also comprise the calculation of the Proportional Fair (PF) weights with CQI frequency response to support frequency selective scheduling. The user packet scheduler 107B may then use said processing results to determine modulation and coding schemes using the CQI and antenna selection for data transmission on the channel 102A using the PMI and the RI.

In step 205, the user packet scheduler 107B may send to the home partial cell packet scheduler 109A a resource message indicative of the modulation and coding schemes and antenna selection; as well as the RLC buffer size of the user data processor 111B. The resource message may also indicate an allocation priority of the user 101A and a CSI and HARQ retransmission indicator (only if retransmission is needed) of the channel 102A. The user packet scheduler 207B may assign an allocation priority to the user 101A based on at least one of the bitrate of data transmitted on the channel 102 associated to the user 101A.

In step 207, depending on available resources of the radio cell 103, the home partial cell packet scheduler 109A may schedule physical resource blocks (PRB) for the channel 102A of the user 101A as well as for the rest of first users of the users 101B-101N for which the home partial cell packet scheduler 109A received scheduling conditions information from associated user packet schedulers.

The entities within a home and a remote BBU may be synchronized in time domain. A synchronization mechanism may be implemented, that allows a synchronous start of the Scheduler parts on user (user packet schedulers) and cell level (partial cell packet scheduler), where the reference may be the timing of the cell signals (where TTI starts) of the cell packet scheduler of the home BBU.

For example, in case, there is enough PRB groups for the first users, the home partial cell packet scheduler 109A returns, in step 209, a response message to the respective user packet schedulers e.g. to 107B from which the home partial cell packet scheduler 109A received resource information. The response message may indicate a confirmation of the received MCS and antenna selection as an acceptance of the proposal from the user packet schedulers. The message may further indicate the PRB allocation for the channel 102A and a CCE allocation to be applied for the PDCCH which is used to indicate to the user 101A where it can find its scheduled data.

However, in case there are not enough PRB groups for the first users, the home partial cell packet scheduler 109A may sort the first users by the allocation priority in step 211, and may select a subgroup of users of the first users having the lowest priority to be excluded or downgraded in step 213. For example, it may exclude the users having the lowest allocation priority until the PRBs are enough and the QoS is not yet affected. Next, in step 215, the home partial cell packet scheduler 109A may perform one of: excluding users of the subgroup such that no scheduling neither processing of their data is to be performed within the home BBU; reducing the PRB usage and adapting the MCS for the subgroup of users; and modifying the antenna selection to achieve a lower PRB usage for lower priority users. In step 217, the home partial cell packet scheduler may send to the user packet scheduler 107B a resource modify message indicative of the modified MCS or antenna selection or the excluded users.

The expression "Enough PRB groups" refer to the minimum number of PRBs in time and frequency domains that fulfill CQI requirements and MCS and antenna selection requirements.

As soon as the user packet scheduler 107B receives the response message concerning resources from the home partial cell packet scheduler 109A, the user packet scheduler 107B may determine, in step 219, processing resources required for establishing the channel 102A using the resource assignment information, and send, in step 221, a resource request message to the LRM 121A of the baseband band unit 100A indicative of the determined processing resources to check if there is enough processing capacity.

In addition an indication of the reduced processing effort need corresponding to a parameter set, where the QoE parameters (e.g. guaranteed bit rate and latency) are just met and an indication, if the data radio bearer carries a GBR or NGBR application is send by the user schedulers to the LRM.

The check of enough processing may be done in combination with at least part of the QoE metrics. That is, verifying that the determined amount of resources to be allocated is fulfilling at least part of the QoE metrics. In case of enough processing capacity after receiving the needed processing capacity from all user packet schedulers, the LRM 121A accepts the proposal by sending back in step 223 a processing estimation confirmation message to the user packet scheduler 107B.

In case of not enough processing capacity the LRM 121A triggers instep 225 a downgrade of the processing needs while satisfying a QoE and GBR/NGBR awareness and sends in step 227 back a processing estimation modify message to the user packet schedulers e.g. 107B. The processing estimation modify message indicates a modification of the processing resources determined (or estimated) by the user packet scheduler 107B.

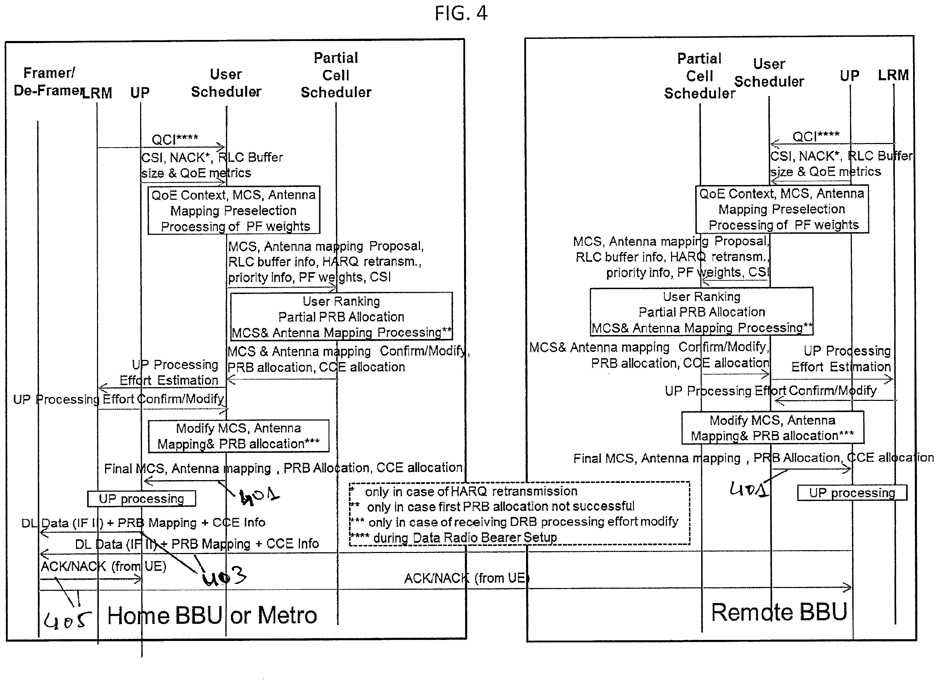

After receiving the feedback from their associated LRM the user packet schedulers are starting a MCS and antenna mapping refinement matched to the allocated processing capacity (e.g. PRBs). After this refinement the user packet schedulers are forwarding the final MCS, antenna mapping, PRB and CCE allocation to the associated user data processors and the DL scheduling processing can continue as described with reference to Fig. 4.

The steps 201B-227 may be repeated in a periodic basis during an operational scheduling phase per TTI where the RLC buffer shows data in the buffer for the user 101A; wherein the scheduling conditions information are also periodically received from the user 101A during the operation scheduling phase.

For the scheduling of the uplink data, the steps 201-227 for the downlink data may be used as well. However, the received scheduling conditions information may have different content. Namely, during setup of the channel 102A, the user packet scheduler 207B may receive, in step from the LRM 121A associated with the user packet scheduler 107B QCI for the channel 102A. During initial scheduling phase, the user packet scheduler 107B may receive a scheduling request (SR) from the user 101A via the user data processor 111B. The user data packet scheduler 107B may further receive from the user data processor 111B channel state information, CSI, including a channel quality indicator, COI, PMI and rank indicator for the channel 102A. The user packet scheduler 107B may further receive a negative acknowledgement, NACK, indicator from the user processor unit 111B in case of needed retransmission. Further, the user packet scheduler 107B may receive from the user data processor 111B, the UE Buffer status during operational scheduling phase.

Further, the user packet scheduler 107B may process the received scheduling conditions information for uplink data. The processing may comprise for example determining whether the received QCI fulfill QoE metrics requirements using information from SR and UE buffer status. The processing may also comprise the calculation of the PF weights with CQI frequency response to support frequency selective scheduling. The user packet scheduler 107B may then use said processing results to determine modulation and coding schemes using the CQI and antenna selection for data transmission on the channel 102A using the PMI and the RI.

In Fig. 4 a home BBU and a remote BBU is schematically shown connected via a high latency link. In this example 1UP is placed at the home BBU and 1 UP is placed at the remote BBU. In the general case this may also be an interaction between one home BBU and several Remote BBUs each connected via a high latency link to the home BBU.

The preparation and coordination phase of this scheduler process is already described with reference to Fig. 3 and may be applied between each of the 4 UPs and the partial cell packet scheduler.

After receiving the final MCS, antenna Mapping, PRB- and CCE allocation the UPs are starting the processing of the DL data in step 401, which may be then delivered in step 403 with an in-band information of the PRB and CCE allocation to the framer of the cell physical layer processor 115. Using received data from the home BBU and remote BBU the framer of the cell physical layer processor 115 may be able to generate the PDSCH and the PDCCH and send them to the user 101A. This procedure may be done for up to 8 HARQ processes for each user (or channel of a user) of the users 101A-N.

After latest 8ms an ACK/NACK is expected from the user (step 405). In case of a NACK, the user data processor may enable a retransmission for the affected HARQ process and the scheduling process starts from the beginning of step 201 B.

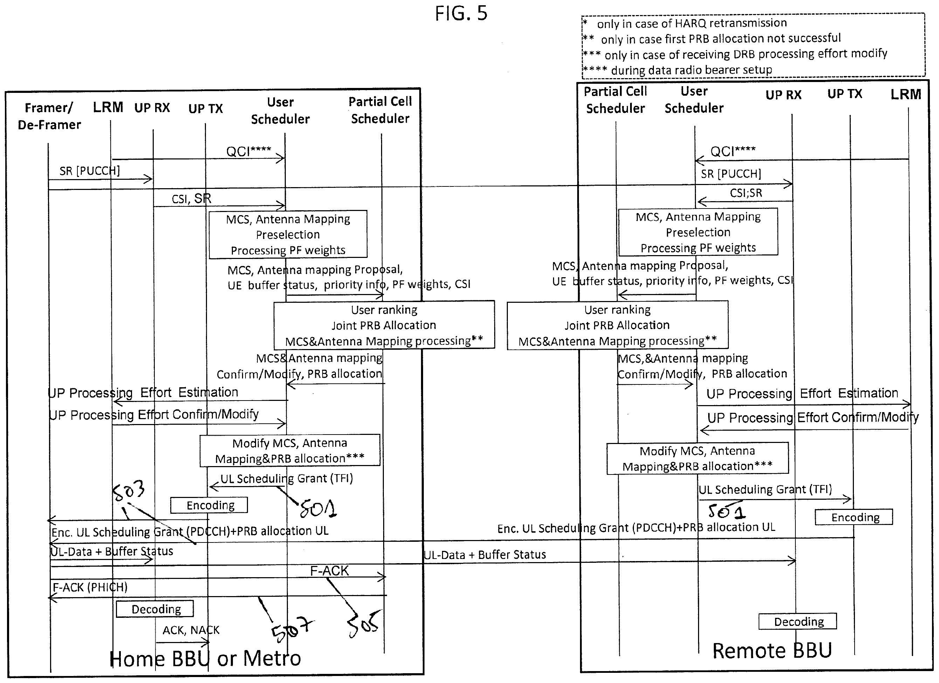

In Fig. 5 an interaction between a home BBU and a remote BBU linked via a high latency link is shown. In this example, 1 UP is placed at the home BBU and 1 UP is placed at the remote BBU. In the general case this could be also an interaction between one home BBU and several remote BBUs each linked via a high latency link with the home BBU.

The UL scheduling initial process starts with the reception of a SR from the user at the UPRx from the Deframer of the cell physical layer processor 115, which is forwarded to the corresponding user packet scheduler. The preparation and coordination phase of this scheduler process is already described with reference to Fig. 3, where an initial scheduling phase is indicated.

After receiving an UL scheduling grant (step 501) including the final MCS, Antenna Mapping and PRB allocation the UPTx parts are processing the encoded UL scheduling grant for the PDCCH, which will be then delivered to the Framer (step 503). With all these signals from home BBU and remote BBU the Framer is able to generate the DPCCH and send it to the user.

In the timing diagram of Fig. 5, it can be seen that an ACK/NACK from the UP RX in the remote BBU may come too late (compared to the home BBU) and the user may perform a retransmission, although it is not yet known if the data have been received correctly or not. This unnecessary retransmission may occupy radio resources that could be used for the scheduling of other users. To avoid that unnecessary retransmission, a forced ACK mechanism may be applied for the remote UPs, because after 8 ms at the latest the user expects an ACK or NACK to decide if retransmissions are needed or not. This can be achieved by identifying the reception of the remote UP data in the De-frame of the cell physical layer processor 115.

The De-framer then triggers in step 505 the home partial cell packet scheduler on the home BBU to send an ACK towards the Framer in step 507. The Framer then includes the ACK into the PHICH and sends it to the user, which does not yet clear the data buffer (The data will be deleted only in case of a set of the NDI flag in the Scheduling Grant).

After the forced acknowledgement is sent, and in case of detecting a NACK in the remote UPRx, this NACK may be forwarded to the user packet scheduler of the remote BBU. The user packet scheduler then takes the needed retransmission into account in the next Scheduling coordination with its associated remote partial cell packet scheduler and may not set the NDI flag in the next scheduling grant and the user performs a retransmission.

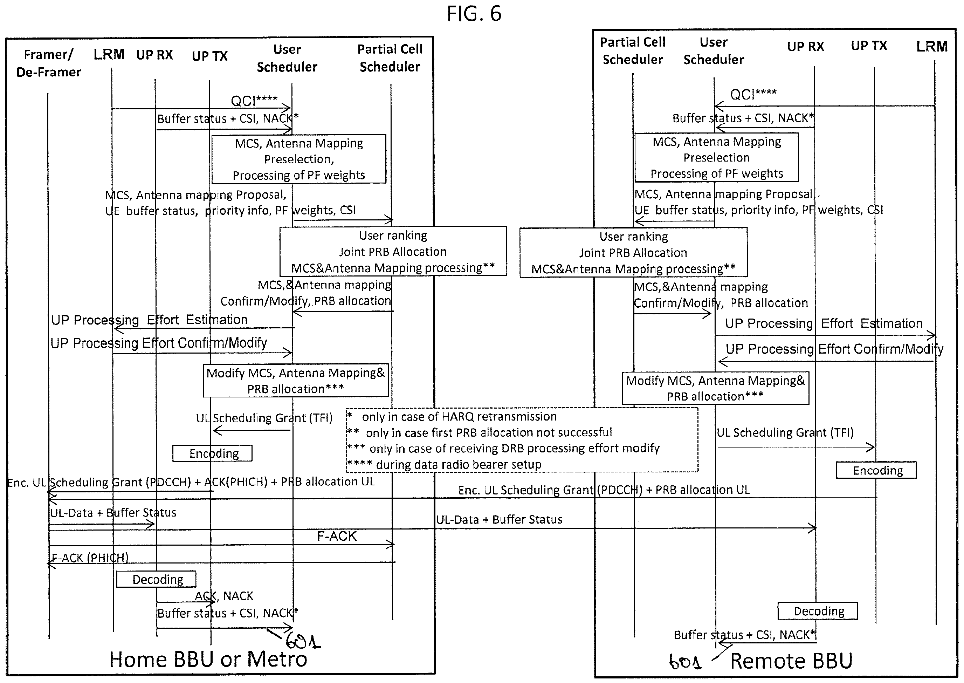

In Fig. 6, is described the operational phase of the scheduling which follows the scheduling steps described before with reference to Fig. 5. After latest 8ms the UL data and a Buffer Status are expected from the user and forwarded from the Deframer to the UPRx, which delivers then the user buffer status to the user packet scheduler (step 601) and a ACK or NACK to the UPTx. In case of a NACK a retransmission may be triggered. The user packet scheduler starts the same scheduling coordination process as described before also during this operational phase; with the difference that the received resource scheduling information does not contain the scheduling request data since the scheduling request is sent at once for the initial scheduling phase.

After final MCS, antenna selection and PRBs allocation, the UPTx sends an ACK/NACK and again encoded UL scheduling grant via the framer to the UE. The Scheduling Grant will be inserted in the DPCCH and the ACK/NACK in the PHICH by the framer. This procedure of Fig. 6 goes on as long as the user is in the operational scheduling phase, and as long it shows data in the buffer for this channel.

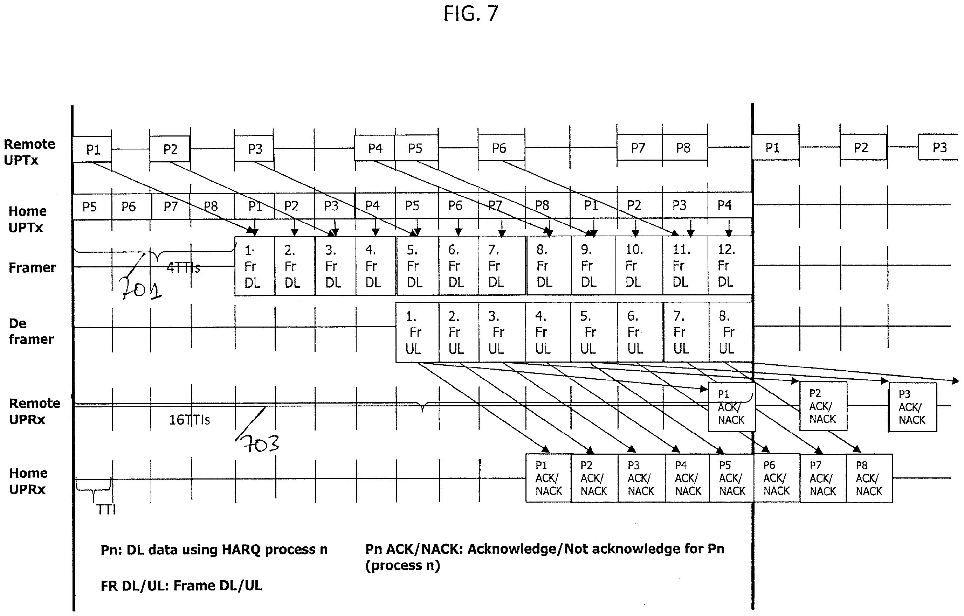

Fig. 7 shows a HARQ timing for downlink data. In this example a 4 TTIs 701 maximum one way delay over backhauling is assumed. Fig. 7 depicts the worst case tim-timing for the usage of the 8 HARQ processes, where one user each in remote and home location is using 8 consecutive HARQ processes.

It can be seen that in this example 16 ms (16 TTIs) 703 roundtrip time is required instead of 8 ms defined in 3GPP. The assumption here is to stay with 8 HARQ processes per user and this 8 processes can be used during this 16 ms roundtrip time in any TTI pattern. This relaxed HARQ timing for DL may be done by increasing the HARQ time in the HARQ timer e.g. to 16ms.

Fig. 7 shows an example of a TTI pattern. This pattern should be kept. If there are any changes needed, the HARQ processes that are advanced in time compared to the previous partitioning may not be used in the following 16 ms period after modification.

In the general case the resulting roundtrip time can be expressed as: RTT = 8 ms + 2 • delay_backhauling.

This timing situation can be accepted (with an increased HARQ timer) for user or channels carrying applications with all QCIs except QCI 4 (real-time gaming), where larger E2E latencies can be tolerated as shown in the following QCI table

**Table1. Standardized QCIs for LTE**

| QCI | RESOURCE TYPE | PRIORITY | PACKET DELAY BUDGET (MS) | PACKET ERROR LOSS RATE | EXAMPLE SERVICES |
|---|---|---|---|---|---|
| 1 | GBR | 2 | 100 | 10⁻² | Conversational voice |
| 2 | GBR | 4 | 150 | 10⁻³ | Conversational video (live streaming) |
| 3 | GBR | 5 | 300 | 10⁻⁶ | Non-conversational video (buffered streaming) |
| 4 | GBR | 3 | 50 | 10⁻³ | Real-time gaming |
| 5 | Non-GBR | 1 | 100 | 10⁻⁶ | IMS signaling |
| 6 | Non-GBR | 7 | 100 | 10⁻³ | Voice, video (live streaming), interactive gaming |
| 7 | Non-GBR | 6 | 300 | 10⁻⁶ | Video (buffered streaming) |
| 8 | Non-GBR | 8 | 300 | 10⁻⁶ | TCP-based (for example, WWW, e-mail), chat, FTP, p2p file sharing, progressive video and others |
| 9 | Non-GBR | 9 | 300 | 10⁻⁶ | |

The QCIs will be taken into account in the placement decision for virtualization by the Decentralized Cloud Controler (DCC).

In addition to avoid an aging of the UE CSI only static or slow moving UEs or fast moving UEs (with frequency-diverse scheduling, and open loop MIMO) may be placed to remote BBUs with high latency connection to Home BBU. This procedure may be relevant for the eX2 interface in the multi-vendor environment and may have no impact on the standard of the Uu interface and a virtualization of a user or a DRB of the UE can be applied.

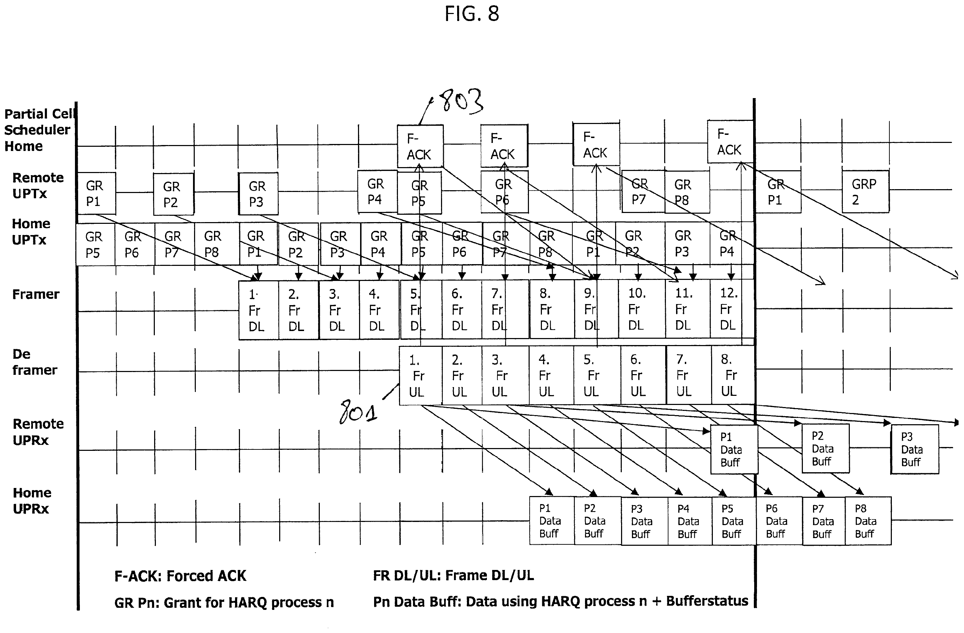

Fig. 8 depicts the same timing condition and example is applied to the uplink data according to the DL case described with reference to Fig. 7. In addition, Fig. 8 depicts the Forced ACK mechanism. The fact that an ACK/NACK from the remote BBU may come too late (due to the high latency link), the user may perform a retransmission, although it is not yet known if the data have been received correctly or not. This unnecessary retransmission may occupy radio resources that could be used for the scheduling of other users. This may be solved as shown in Fig. 8 the forced ACK (F-ACK) mechanism for the Remote BBUs in order to avoid user retransmissions. For example, as soon as the data packet arrived from the UE to the de-framer in the first UL frame 801, the de-framer may trigger the home partial cell packet scheduler to send a F-ACK at the TTI 803 such that it reaches the UE in within the expected time interval of arrival. Concerning the offloading treatment with QCIs the same applies as for the DL case. So far this procedure is standard relevant for the eX2 interface in the multi-vendor environment but has no impact on the standard of the Uu interface as long a virtualization of UEs is in the scope. In case of virtualization on radio bearer level, a standard modification of the Uu interface is needed in such a way that the UL scheduler in the eNodeB needs to control which UE data radio bearer is scheduled with the UL grant. As long as there is no standard modification of the Uu interface available, only a UE virtualization can be realized to avoid that a UP TX and UP RX is placed on different BBUs, which would introduce unnecessary additional overhead.

### List of reference numerals

- 100: baseband processing assembly
- 100A-B: BBU
- 101: user
- 102: channel
- 104: RRH
- 105: cell
- 107: user packet scheduler
- 109A: master partial cell packet scheduler
- 109B: slave partial cell packet scheduler
- 111: user data processors
- 112: processing elements
- 113: load distributer
- 115: physical cell layer processor
- 121: LRM
- 127: router
- 200A-B: baseband processing apparatus
- 221: MME
- 301: user
- 305: cell
- 304: RRH

## Claims

1. A baseband processing assembly (100) comprising at least a first and second baseband unit (100A, 100B) linked via a high latency backhaul link (122), wherein the first base band unit (100A) is operable for processing signals of at least one remote radio head (104), the at least one remote radio head (104) serving a radio cell (105) of a cellular communication system, the first baseband unit (100A) comprising a first set of user packet schedulers (107A-G), a first partial cell packet scheduler (109A) and a first set of user data processors (111A-G) adapted to perform dedicated control plane protocol stack processing of respective user specific data, wherein the first partial cell packet scheduler (109A) is associated to the radio cell (105), wherein the first set of user packet schedulers (107A-G) are assigned to a first group of users (101 A) associated to the radio cell (105), the second baseband unit comprising a second set of user packet schedulers (107K-P), a second partial cell packet scheduler (109B) and a second set of user data processors (111K-P) adapted to perform dedicated control plane protocol stack processing of respective user specific data, wherein the second partial cell packet scheduler (109B) is associated to the radio cell (105), wherein the second set of user packet schedulers (107K-P) are assigned to a second group of users (101B) associated to the radio cell (105), wherein a first user packet scheduler (107B) of the first set of user packet schedulers (107A-G) and the first partial cell packet scheduler (109A) are operable to exchange data for providing first resource assignment information and establishing a first channel (102A) with a first user (101A) of the first group of users using the first resource assignment information, wherein a second user packet scheduler (107K) of the second set of user packet schedulers (107K-P) and the second partial cell packet scheduler (109B) are operable to exchange data for providing second resource assignment information and establishing a second channel (102B) with a second user (101B) of the second group of users using the second resource assignment information.

2. The baseband processing assembly of claim 1, wherein the first partial cell packet scheduler (109A) is operable to partition resources assigned to the radio cell (105) into at least two resource partitions and assign a resource partition of the at least two resource partitions to the second partial cell packet scheduler (109B).

3. The baseband processing assembly of claim 1 or 2, wherein the second partial cell packet scheduler (109B) is operable to receive a resource partition information indicative of a resource partition of the resources of the radio cell (105) from the first partial cell packet scheduler (109A), wherein the resource partition comprises a plurality of resource blocks in time and frequency domains, wherein the second resource assignment information is indicative of at least part of the plurality of the resource blocks to be assigned to the second channel (102B).

4. The base band processing assembly of any of the preceding claims, further comprising a load distributer (113A) operable to assign processing tasks of the first user and the second user (101A, 101B) to a respective first and second user data processor (111B, 111K) of the first and second baseband unit (100A, 100B).

5. The baseband processing assembly of claim 3, wherein the assignment of the second user packet scheduler to the second user (101B) is performed based on at least one of the offloading conditions:
- End-to-end delay for RAN part of the end to end data transmission on the second channel (102B) is higher than the expected latency of the high latency link;
- coherence time for the second channel (102B) is larger than the expected latency of the high latency link (122);
- velocity of the second user (101B) is higher than a preset maximum velocity value.

6. The base band processing assembly of any of the preceding claims, wherein the first and second resource assignment information are provided according to at least one radio access technology.

7. The base band processing assembly of any of preceding claims , wherein the first user packet scheduler (107B) is operable to:
receive scheduling conditions information for the first user (101A);
process the received scheduling conditions information, thereby determining modulation and coding schemes and antenna selection for data transmission on the first channel (102A);
send to the first partial cell scheduler a resource message indicative of the modulation and coding schemes and antenna selection;
receive a response from the first partial cell scheduler indicative of radio resource blocks information for the first channel and a confirmation of the determined MCS and antenna selection; wherein the first resource assignment information comprises the MCS, antenna selection and the radio resource blocks information.

8. The base band processing assembly of claim 7, wherein the first user packet scheduler (107B) is further operable to:
determine processing resources required for establishing the first channel using the resource assignment information;
send a resource request message to a Local Resource Manager, LRM, (121A) of the first baseband processing unit indicative of the determined processing resources;
receive a resource grant message from the LRM (121A).

9. The base band processing assembly of claim 7 or 8, wherein the first partial cell packet scheduler (109A) is operable to:
receive an allocation priority of each user of the first group of users from a respective assigned user packet scheduler of the first set of user packet schedulers (107A-G);
sort the first group of users by the allocation priority;
in response to a determination that available radio resources are not sufficient for the first group of users, selecting a subgroup of users of the first group of users having lowest allocation priority and perform one of:
excluding users of the subgroup;
modifying the modulation and coding schemes for the subgroup of users;
modifying the antenna selection for the subgroup of users.

10. The base band processing assembly of claim 7, 8 or 9, wherein in case the first channel (102A) is a downlink channel, the received scheduling conditions information comprises a channel state information, CSI, including a channel quality indicator, CQI, of the first user, precoding matrix indicator ,PMI and a ranking indicator, a negative acknowledgement, NACK, indicator in case of needed retransmission, Quality of Experience, QoE, metrics comprising each a performance characteristic for the first channel ; and an Radio Link Control, RLC, buffer size of the first channel.

11. The base band processing assembly of claim 7, 8 or 9, wherein in case the first channel (102A) is an uplink channel, the received scheduling information comprises a CSI including a CQI of the first user, PMI, rank indicator, NACK indicator in case of needed retransmission, scheduling request for at least one uplink component carrier, and a buffer status report of the first user.

12. The base band processing assembly of any of preceding claims, wherein the second baseband unit (100B) is operable to relax a HARQ round trip time for performing a HARQ process on the second channel (102B) based on the latency of the high latency backhaul link (122), wherein the second scheduling and user data processing of the second channel is performed before the first scheduling and user data processing of the first channel on the relaxed HARQ round trip time.

13. The base band processing assembly of any of preceding claims, wherein in case the second channel (102B) is an uplink channel, the first base band unit (100A) is further adapted to send a forced acknowledgment message upon receiving a data packet from the second user, wherein the forced acknowledgment message is sent before the data packet reaches the second baseband unit and within the HARQ round trip time.

14. A method of channel establishment in a baseband processing assembly (100) comprising at least a first and second baseband unit (100A, 100B) linked via a high latency backhaul link (122), wherein the first base band unit (100A) is operable for processing signals of at least one remote radio head (104), the at least one remote radio head serving a radio cell of a cellular communication system, the first baseband unit (100A) comprising a first set of user packet schedulers (107A-G), a first partial cell packet scheduler (109A) and a first set of user data processors (111A-G) adapted to perform dedicated control plane protocol stack processing of respective user specific data, wherein the first partial cell packet scheduler (109A) is associated to the radio cell, wherein the first set of user packet schedulers are assigned to a first group of users associated to the radio cell (105), the second baseband unit (100B) comprising a second set of user packet schedulers (107K-P), a second partial cell packet scheduler (109B) and a second set of user data processors (111K-P) adapted to perform dedicated control plane protocol stack processing of respective user specific data, wherein the second partial cell packet scheduler is associated to the radio cell, wherein the second set of user packet schedulers are assigned to a second group of users associated to the radio cell, the method comprising exchanging data between a first user packet scheduler (107B) of the first set of user packet schedulers and the first partial cell packet scheduler; providing first resource assignment information; establishing a first channel (102A) with a first user of the first group of users using the first resource assignment information, exchanging data between a second user packet scheduler (107K) of the second set of user packet schedulers and the second partial cell packet scheduler; providing second resource assignment information and establishing a second channel (102B) with a second user of the second group of users using the second resource assignment information.

15. A computer program product comprising computer executable instructions to perform the method steps of the method of claim 14 when executed in a computer.

## Patentansprüche

1. Basisbandverarbeitungsanordnung (100), mindestens eine erste und eine zweite Basisbandeinheit (100A, 100B) umfassend, die über einen hochlatenten Backhaul-Link (122) verbunden sind, wobei die erste Basisbandeinheit (100A) ausgelegt ist für das Verarbeiten von Signalen von mindestens einem Remote Radio Head (104), wobei der mindestens eine Remote Radio Head (104) eine Funkzelle (105) eines zellularen Kommunikationssystems bedient, wobei die erste Basisbandeinheit (100A) einen ersten Satz von Benutzerpaket-Zeitplanern (107AG), einen ersten partiellen Zellpaket-Zeitplaner (109A) und einen ersten Satz von Benutzerdaten-Prozessoren (111A-G) umfasst, ausgelegt zum Ausführen einer dedizierten Steuerebenen-Protokollstapelverarbeitung entsprechender benutzerspezifischer Daten, wobei der erste partielle Zellpaket-Zeitplaner (109A) mit der Funkzelle (105) assoziiert ist, wobei der erste Satz von Benutzerpaket-Zeitplanern (107A-G) einer ersten Gruppe von Benutzern (101A) zugeordnet ist, die mit der Funkzelle (105) assoziiert sind, wobei die zweite Basisbandeinheit einen zweiten Satz von Benutzerpaket-Zeitplanern (107K-P), einen zweiten partiellen Zellpaket-Zeitplaner (109B) und einen zweiten Satz von Benutzerdaten-Prozessoren (111K-P) umfasst, ausgelegt für das Durchführen einer dedizierten Steuerebenen-Protokollstapelverarbeitung entsprechender benutzerspezifischer Daten, wobei der zweite partielle Zellpaket-Zeitplaner (109B) mit einer Funkzelle (105) assoziiert ist, wobei der zweite Satz von Benutzerpaket-Zeitplanern (107K-P) einer zweiten Gruppe von Benutzern (101B) zugeordnet ist, die mit der Funkzelle (105) assoziiert sind, wobei ein erster Benutzerpaket-Zeitplaner (107B) des ersten Satzes von Benutzerpaket-Zeitplanern (107A-G) und der erste partielle Zellpaket-Zeitplaner (109A) ausgelegt sind für den Austausch von Daten zur Bereitstellung einer ersten Ressourcenzuweisungsinformation und zum Einrichten eines ersten Kanals (102A) mit einem ersten Benutzer (101A) aus der ersten Gruppe von Benutzern unter Verwendung der ersten Ressourcenzuweisungsinformation, wobei ein zweiter Benutzerpaket-Zeitplaner (107K) aus dem zweiten Paket von Benutzerpaket-Zeitplanern (107K-P) und der zweite partielle Zellpaket-Zeitplaner (109B) ausgelegt sind für den Austausch von Daten zum Zweck des Bereitstellens einer zweiten Ressourcenzuweisungsinformation und des Einrichtens eines zweiten Kanals (102B) mit einem zweiten Benutzer (101B) aus der zweiten Gruppe von Benutzern unter Verwendung der zweiten Ressourcenzuweisungsinformation.

2. Die Basisbandverarbeitungsanordnung nach Anspruch 1, wobei der erste partielle Zellpaket-Zeitplaner (109A) ausgelegt ist für das Partitionieren von Ressourcen, die der Funkzelle (105) zugewiesen sind, in mindestens zwei Ressourcenpartitionen, und für das Zuweisen einer Ressourcenpartition der mindestens zwei Ressourcenpartitionen zu dem zweiten partiellen Zellpaket-Zeitplaner (109B).

3. Die Basisbandverarbeitungsanordnung nach Anspruch 1 oder 2, wobei der zweite partielle Zellpaket-Zeitplaner (109B) dafür ausgelegt ist, um vom ersten partiellen Zellpaket-Zeitplaner (109A) eine Ressourcenpartitionsinformation zu empfangen, die indikativ ist für eine Ressourcenpartition der Ressourcen der Funkzelle (105), wobei die Ressourcenpartition eine Vielzahl von Ressourcenblocks in Zeit- und Frequenzdomains umfasst, wobei die zweite Ressourcenzuweisungsinformation indikativ ist für mindestens einen Teil aus der Vielzahl von Ressourcenblocks, die dem zweiten Kanal (102B) zuzuweisen sind.

4. Die Basisbandverarbeitungsanordnung aus einem jeglichen der vorgenannten Ansprüche, weiterhin einen Ladungsdistributor (113A) umfassend, der dafür ausgelegt ist, um Verarbeitungsaufgaben des ersten Benutzers und des zweiten Benutzers (101A, 101B) einem entsprechenden ersten und zweiten Benutzerdatenprozessor (111B, 111K) der ersten und zweiten Basisbandeinheit (100A, 100B) zuzuweisen.

5. Die Basisbandverarbeitungsanordnung nach Anspruch 3, wobei das Zuweisen des zweiten Benutzerpaket-Zeitplaners zum zweiten Benutzer (101B) auf der Grundlage mindestens einer der folgenden Abladebedingungen durchgeführt wird:
- die Ende-zu-Ende-Verzögerung für den Radio-Access-Network-Teil (RAN) der Ende-zu-Ende-Datenübertragung auf dem zweiten Kanal (102B) ist höher als die erwartete Latenz des hochlatenten Links;
- der Wert der Kohärenzzeit für den zweiten Kanal (102B) ist größer als die erwartete Latenz des hochlatenten Links (122);
- die Geschwindigkeit des zweiten Benutzers (101B) ist höher als der voreingestellte Wert für die maximale Geschwindigkeit.

6. Die Basisbandverarbeitungsanordnung nach einem jeglichen der vorgenannten Ansprüche, wobei die erste und die zweite Ressourcenzuweisungsinformation gemäß mindestens einer Funkzugangstechnologie zur Verfügung gestellt werden.

7. Die Basisbandverarbeitungsanordnung nach einem jeglichen der vorgenannten Ansprüche, wobei der erste Benutzerpaket-Zeitplaner (107B) ausgelegt ist für:
den Empfang einer Zeitplanungsbedingungsinformation für den ersten Benutzer (101A);
das Verarbeiten der empfangenen Zeitplanungsbedingungsinformation, dadurch die Modulations- und Codiermuster sowie die Antennenauswahl für die Datenübertragung auf dem ersten Kanal (102A) bestimmend;
das Senden einer Ressourcennachricht an den ersten partiellen Zellpaket-Zeitplaner, welche die Modulations- und Codiermuster (Modulation and Coding Schemes, MCS) sowie die Antennenauswahl anzeigt;
den Empfang einer Antwort von dem ersten partiellen Zellpaket-Zeitplaner, welche die Funkressourcenblockinformation des ersten Kanals und eine Bestätigung der bestimmten MCS und Antennenauswahl anzeigt; wobei die erste Ressourcenzuweisungsinformation die Informationen zum MCS, zur Antennenauswahl und zu den Funkressoucenblöcken umfasst.

8. Die Basisbandverarbeitungsanordnung nach Anspruch 7, wobei der erste Benutzerpaket-Zeitplaner (107B) weiterhin ausgelegt ist für:
das Bestimmen der für das Einrichten des ersten Kanals erforderlichen Ressourcen unter Verwendung der Ressourcenzuweisungsinformation;
das Senden einer Ressourcenanfragenachricht an einen Local Ressource Manager (LRM, 121A) der ersten Basisbandverarbeitungseinheit, wobei die Ressourcenanfragenachricht die bestimmten Verarbeitungsressourcen anzeigt;
den Empfang einer Ressourcenbewilligungsnachricht vom LRM (121A).

9. Die Basisbandverarbeitungsanordnung nach Anspruch 7 oder 8, wobei der erste partielle Zellpaket-Zeitplaner (109A) ausgelegt ist für:
den Empfang einer Zuweisungspriorität eines jeden Benutzers der ersten Gruppe von Benutzern von einem entsprechenden, zugewiesenen Benutzerpaket-Zeitplaner aus dem ersten Satz von Benutzerpaket-Zeitplanern (107A-G);
das Sortieren der ersten Gruppe von Benutzern nach der Zuweisungspriorität;
in Reaktion darauf, dass bestimmt wurde, dass die verfügbaren Funkressourcen für die erste Gruppe von Benutzern nicht ausreichend sind, die Auswahl einer Teilgruppe von Benutzern mit der niedrigsten Zuweisungspriorität aus der ersten Gruppe von Benutzern und das Ausführen eines der folgenden Schritte:
das Ausschließen der in der Teilgruppe enthaltenen Benutzer;
das Modifizieren der Modulations- und Codiermuster für die Teilgruppe von Benutzern;
das Modifizieren der Antennenauswahl für die Teilgruppe von Benutzern.

10. Die Basisbandverarbeitungsanordnung nach Anspruch 7, 8 oder 9, wobei in dem Fall, dass der erste Kanal (102A) ein Downlink-Kanal ist, die empfangene Zeitplanungsbedingungsinformation Folgendes umfasst: eine Kanalzustandsinformation (Channel State Information, CSI) einschließlich Kanalqualitätsindikator (Channel Quality Indicator, CQI) des ersten Benutzers, Precodiermatrixindikator (PMI) und Rankingindikator, im Fall einer erforderlichen Übertragungswiederholung einen Indikator einer negativen Bestätigung (Negative Acknowledgement, NACK), Metriken zur Erfahrungsqualität (Quality of Experience, QoE) jeweils mit Leistungscharakteristiken für den ersten Kanal und eine Puffergröße einer Funkverbindungsteuerung (Radio Link Control, RLC) des ersten Kanals.

11. Die Basisbandverarbeitungsanordnung nach Anspruch 7, 8 oder 9, wobei in dem Fall, dass es sich beim ersten Kanal (102A) um einen Uplink-Kanal handelt, die empfangene Zeitplanungsinformation Folgendes umfasst: CSI einschließlich CQI des ersten Benutzers, PMI, Rankingindikator, NACK-Indikator im Fall einer notwendigen Übertragungswiederholung, Zeitplanungsanfrage für mindestens einen Uplink-Komponententräger und einen Pufferstatusbericht des ersten Benutzers.

12. Die Basisbandverarbeitungsanordnung nach einem jeglichen der vorgenannten Ansprüche, wobei die zweite Basisbandeinheit (100B) ausgelegt ist für das Lockern einer Round-Trip-Zeit für eine hybride automatische Wiederholungsaufforderung (Hybrid Automatic Repeat Request, HARQ) für das Durchführen eines HARQ-Prozesses auf dem zweiten Kanal (102B) auf der Grundlage der Latenz des hochlatenten Backhaul-Links (122), wobei die zweite Zeitplanung und die Benutzerdatenverarbeitung des zweiten Kanals gemäß der gelockerten HARQ-Round-Trip-Zeit vor der ersten Zeitplanung und Benutzerdatenverarbeitung des ersten Kanals erfolgt.

13. Die Basisbandverarbeitungsanordnung nach einem jeglichen der vorgenannten Ansprüche, wobei die erste Basisbandeinheit (100A) in dem Fall, dass der zweite Kanal (102B) ein Uplink-Kanal ist, weiterhin ausgelegt ist für das Senden einer erzwungenen Bestätigungsnachricht in Reaktion auf den Empfang eines Datenpakets von dem zweiten Benutzer, wobei die erzwungene Bestätigungsnachricht gesendet wird, ehe das Datenpaket die zweite Basisbandeinheit erreicht und innerhalb der HARQ-Round-Trip-Zeit.

14. Verfahren für das Einrichten eines Kanals in einer Basisbandverarbeitungsanordnung (100), mindestens eine erste und eine zweite Basisbandeinheit (100A, 100B) umfassend, die über einen hochlatenten Backhaul-Link (122) verbunden sind, wobei die erste Basisbandeinheit (100A) ausgelegt ist für das Verarbeiten von Signalen von mindestens einem Remote Radio Head (104), wobei der mindestens eine Remote Radio Head eine Funkzelle eines zellularen Kommunikationssystems bedient, wobei die erste Basisbandeinheit (100A) einen ersten Satz von Benutzerpaket-Zeitplanern (107A-G), einen ersten partiellen Zellpaket-Zeitplaner (109A) und einen ersten Satz von Benutzerdaten-Prozessoren (111A-G) umfasst, ausgelegt zum Ausführen einer dedizierten Steuerebenen-Protokollstapelverarbeitung entsprechender benutzerspezifischer Daten, wobei der erste partielle Zellpaket-Zeitplaner (109A) mit der Funkzelle assoziiert ist, wobei der erste Satz von Benutzerpaket-Zeitplanern einer ersten Gruppe von Benutzern zugeordnet ist, die mit der Funkzelle (105) assoziiert sind, wobei die zweit Basisbandeinheit (100B) einen zweiten Satz von Benutzerpaket-Zeitplanern (107K-P), einen zweiten partiellen Zellpaket-Zeitplaner (109B) und einen zweiten Satz von Benutzerdaten-Prozessoren (111K-P) umfasst, ausgelegt für das Durchführen einer dedizierten Steuerebenen-Protokollstapelverarbeitung entsprechender benutzerspezifischer Daten, wobei der zweite partielle Zellpaket-Zeitplaner mit einer Funkzelle assoziiert ist, wobei der zweite Satz von Benutzerpaket-Zeitplanern einer zweiten Gruppe von Benutzern zugeordnet ist, die mit der Funkzelle assoziiert sind, wobei der zweite Satz von Benutzerpaket-Zeitplanern einer zweiten Gruppe von Benutzern zugeordnet ist, die mit der Funkzelle assoziiert sind, wobei das Verfahren den Austausch von Daten zwischen einem ersten Benutzerpaket-Zeitplaner (107B) des ersten Satzes von Benutzerpaket-Zeitplanern und dem ersten partiellen Zellpaket-Zeitplaner umfasst, und zwar für die Bereitstellung einer ersten Ressourcenzuweisungsinformation und zum Einrichten eines ersten Kanals (102A) mit einem ersten Benutzer aus der ersten Gruppe von Benutzern unter Verwendung der ersten Ressourcenzuweisungsinformation, Daten zwischen einem zweiten Benutzerpaket-Zeitplaner (107K) aus dem zweiten Paket von Benutzerpaket-Zeitplanern und dem zweiten partiellen Zellpaket-Zeitplaner austauschend, eine zweite Ressourcenzuweisungsinformation bereitstellend und einen zweiten Kanal (102B) mit einem zweiten Benutzer aus der zweiten Gruppe von Benutzern einrichtend, was unter Verwendung der zweiten Ressourcenzuweisungsinformation erfolgt.

15. Computerprogramm-Produkt, von einem Computer ausführbare Anweisungen umfassend, um die Verfahrensschritte gemäß Anspruch 14 auszuführen, wenn das Programm auf einem Computer ausgeführt wird.

## Revendications

1. Dispositif de traitement en bande de base (100) comprenant au moins une première et une deuxième unités de bande de base (100A, 100B) reliées par une liaison de backhaul à forte latence (122), dans lequel la première unité de bande de base (100A) permet de traiter des signaux d'au moins une tête radio distante (104), la ou les têtes radio distantes (104) desservant une cellule radio (105) d'un système de communication cellulaire, la première unité de bande de base (100A) comprenant un premier ensemble d'ordonnanceurs de paquets utilisateur (107A-G), un premier ordonnanceur de paquets de cellule partielle (109A) et un premier ensemble de processeurs de données utilisateur (111A-G) adaptés pour réaliser un traitement de pile de protocole de plan de commande dédié des données utilisateur spécifiques correspondantes, dans lequel le premier ordonnanceur de paquets de cellule partielle (109A) est associé à la cellule radio (105), dans lequel le premier ensemble d'ordonnanceurs de paquets utilisateur (107A-G) est alloué à un premier groupe d'utilisateurs (101A) associés à la cellule radio (105), la deuxième unité de bande de base comprenant un deuxième ensemble d'ordonnanceurs de paquets utilisateur (107K-P), un deuxième ordonnanceur de paquets de cellule partielle (109B) et un deuxième ensemble de processeurs de données utilisateur (111K-P) adaptés pour réaliser un traitement de pile de protocole de plan de commande dédié des données utilisateur spécifiques correspondantes, dans lequel le deuxième ordonnanceur de paquets de cellule partielle (109B) est associé à la cellule radio (105), dans lequel le deuxième ensemble d'ordonnanceurs de paquets utilisateur (107K-P) est alloué à un deuxième groupe d'utilisateurs (101B) associés à la cellule radio (105), dans lequel un premier ordonnanceur de paquets utilisateur (107B) du premier ensemble d'ordonnanceurs de paquets utilisateur (107A-G) et le premier ordonnanceur de paquets de cellule partielle (109A) sont conçus pour s'échanger des données afin de fournir des premières informations d'allocation de ressource et d'établir un premier canal (102A) avec un premier utilisateur (101A) du premier groupe d'utilisateurs en utilisant les premières informations d'allocation de ressource, dans lequel un deuxième ordonnanceur de paquets utilisateur (107K) du deuxième ensemble d'ordonnanceurs de paquets utilisateur (107K-P) et le deuxième ordonnanceur de paquets de cellule partielle (109B) sont conçus pour s'échanger des données afin de fournir des deuxièmes informations d'allocation de ressource et d'établir un deuxième canal (102B) avec un deuxième utilisateur (101 B) du deuxième groupe d'utilisateurs en utilisant les deuxièmes informations d'allocation de ressource.

2. Dispositif de traitement en bande de base selon la revendication 1, dans lequel le premier ordonnanceur de paquets de cellule partielle (109A) permet de partitionner les ressources allouées à la cellule radio (105) en au moins deux partitions de ressource et d'allouer une partition de ressource parmi les au moins deux partitions de ressource au deuxième ordonnanceur de paquets de cellule partielle (109B).

3. Dispositif de traitement en bande de base selon la revendication 1 ou 2, dans lequel le deuxième ordonnanceur de paquets de cellule partielle (109B) permet de recevoir des informations de partition de ressource indiquant une partition des ressources de la cellule radio (105) en provenance du premier ordonnanceur de paquets de cellule partielle (109A), dans lequel la partition de ressource comprend une pluralité de blocs de ressource dans les domaines temporels et fréquentiels, dans lequel les deuxièmes informations d'allocation de ressource indiquent au moins une partie de la pluralité de blocs de ressource à allouer au deuxième canal (102B).

4. Dispositif de traitement en bande de base selon l'une quelconque des revendications précédentes, comprenant en outre un distributeur de charge (113A) permettant d'allouer des tâches de traitement du premier utilisateur et du deuxième utilisateur (101A, 101B) à des processeurs de données du premier et du deuxième utilisateur correspondants (111B, 111K) de la première et de la deuxième unité de bande de base (100A, 100B).

5. Dispositif de traitement en bande de base selon la revendication 3, dans lequel l'allocation du deuxième ordonnanceur de paquets utilisateur au deuxième utilisateur (101B) est réalisée en fonction d'au moins une des conditions de délestage suivantes :
- le retard de bout en bout pour la partie RAN de la transmission de données de bout en bout sur le deuxième canal (102B) est supérieur à la latence prévue de la liaison à forte latence ;
- le temps de cohérence pour le deuxième canal (102B) est supérieur à la latence prévue de la liaison à forte latence (122) ;
- la vitesse du deuxième utilisateur (101B) est supérieure à une valeur maximale de vitesse prédéfinie.

6. Dispositif de traitement en bande de base selon l'une quelconque des revendications précédentes, dans lequel les premières et deuxièmes informations d'allocation de ressource sont fournies selon au moins une technologie d'accès radio.

7. Dispositif de traitement en bande de base selon l'une quelconque des revendications précédentes, dans lequel le premier ordonnanceur de paquets utilisateur (107B) permet :
de recevoir des informations sur les conditions d'ordonnancement pour le premier utilisateur (101A) ;
de traiter les informations sur les conditions d'ordonnancement reçues, déterminant ainsi des schémas de modulation et de codage et une sélection d'antenne pour la transmission de données sur le premier canal (102A) ;
d'envoyer au premier ordonnanceur de cellule partielle un message de ressource indiquant les schémas de modulation et de codage et la sélection d'antenne ;
de recevoir une réponse du premier ordonnanceur de cellule partielle fournissant des informations sur les blocs de ressource radio pour le premier canal et une confirmation des MCS et de la sélection d'antenne déterminés ; dans laquelle les premières informations d'allocation de ressource comprennent les MCS, la sélection d'antenne et les informations sur les blocs de ressource radio.

8. Dispositif de traitement en bande de base selon la revendication 7, dans lequel le premier ordonnanceur de paquets utilisateur (107B) permet en outre :
de déterminer les ressources de traitement nécessaires pour établir le premier canal en utilisant les informations d'allocation de ressource ;
d'envoyer un message de demande de ressource à un gestionnaire de ressource local, LRM, (121A) de la première unité de traitement en bande de base indiquant les ressources de traitement déterminées ;
- de recevoir un message d'autorisation de ressource en provenance du LRM (121A).

9. Dispositif de traitement en bande de base selon la revendication 7 ou 8, dans lequel le premier ordonnanceur de paquets de cellule partielle (109A) permet :
de recevoir une priorité d'allocation pour chaque utilisateur du premier groupe d'utilisateurs en provenance d'un ordonnanceur de paquets utilisateur alloué correspondant du premier ensemble d'ordonnanceurs de paquets utilisateur (107A-G) ;
de trier le premier groupe d'utilisateurs selon la priorité d'allocation ;
en réponse à la détermination selon laquelle les ressources radio disponibles ne sont pas suffisantes pour le premier groupe d'utilisateurs, de sélectionner un sous-groupe d'utilisateurs du premier groupe d'utilisateurs pour lesquels la priorité d'allocation est plus basse et de réaliser l'une des opérations suivantes :
exclure des utilisateurs du sous-groupe ;
modifier les schémas de modulation et de codage pour le sous-groupe d'utilisateurs ;
modifier la sélection d'antenne pour le sous-groupe d'utilisateurs.

10. Dispositif de traitement en bande de base selon la revendication 7, 8 ou 9, dans lequel au cas où le premier canal (102A) est un canal de liaison descendante, les informations sur les conditions d'ordonnancement reçues comprennent des informations d'état du canal, CSI, incluant un indicateur de la qualité du canal, CQI, pour le premier utilisateur, un indicateur de matrice de précodage, PMI, et un indicateur de rang, un indicateur d'accusé de réception négatif, NACK, dans le cas où une retransmission est nécessaire, des métriques de qualité d'expérience, QoE, comprenant chacune une caractéristique de performance du canal ; et une taille de tampon de commande de liaison radio, RLC, du premier canal.

11. Dispositif de traitement en bande de base selon la revendication 7, 8 ou 9, dans lequel au cas où le premier canal (102A) est un canal de liaison montante, les informations d'ordonnancement reçues comprennent un CSI incluant un CQI pour le premier utilisateur, un PMI, un indicateur de rang, et un indicateur NACK dans le cas où une retransmission est nécessaire, une demande d'ordonnancement pour au moins une porteuse de composante de liaison montante, et un rapport d'état de tampon pour le premier utilisateur.

12. Dispositif de traitement en bande de base selon l'une quelconque des revendications précédentes, dans lequel la deuxième unité de bande de base (100B) permet d'assouplir le temps de propagation aller-retour HARQ pour exécuter un processus HARQ sur le deuxième canal (102B) en fonction de la latence de la liaison de backhaul à forte latence (122), dans lequel le deuxième ordonnancement et traitement de données utilisateur du deuxième canal est réalisé avant le premier ordonnancement et traitement de données utilisateur du premier canal sur le temps de propagation aller-retour HARQ assoupli.

13. Dispositif de traitement en bande de base selon l'une quelconque des revendications précédentes, dans lequel au cas où le deuxième canal (102B) est un canal de liaison montante, la première unité de bande de base (100A) est en outre adaptée pour envoyer un message d'accusé de réception forcé à la réception d'un paquet de données en provenance du deuxième utilisateur, dans lequel le message d'accusé de réception forcé est envoyé avant que le paquet de données ne parvienne à la deuxième unité de bande de base et dans le temps de propagation aller-retour HARQ.

14. Procédé d'établissement de canal dans un dispositif de traitement en bande de base (100) comprenant au moins une première et une deuxième unités de bande de base (100A, 100B) reliées par une liaison de backhaul à forte latence (122), dans lequel la première unité de bande de base (100A) permet de traiter des signaux d'au moins une tête radio distante (104), la ou les têtes radio distantes desservant une cellule radio d'un système de communication cellulaire, la première unité de bande de base (100A) comprenant un premier ensemble d'ordonnanceurs de paquets utilisateur (107A-G), un premier ordonnanceur de paquets de cellule partielle (109A) et un premier ensemble de processeurs de données utilisateur (111A-G) adaptés pour réaliser un traitement de pile de protocole de plan de commande dédié des données utilisateur spécifiques correspondantes, dans lequel le premier ordonnanceur de paquets de cellule partielle (109A) est associé à la cellule radio, dans lequel le premier ensemble d'ordonnanceurs de paquets utilisateur est alloué à un premier groupe d'utilisateurs associés à la cellule radio (105), la deuxième unité de bande de base (100B) comprenant un deuxième ensemble d'ordonnanceurs de paquets utilisateur (107K-P), un deuxième ordonnanceur de paquets de cellule partielle (109B) et un deuxième ensemble de processeurs de données utilisateur (111 K-P) adaptés pour réaliser un traitement de pile de protocole de plan de commande dédié des données utilisateur spécifiques correspondantes, dans lequel le deuxième ordonnanceur de paquets de cellule partielle est associé à la cellule radio, dans lequel le deuxième ensemble d'ordonnanceurs de paquets utilisateur est alloué à un deuxième groupe d'utilisateurs associés à la cellule radio, le procédé comprenant les étapes suivantes : échanger des données entre un premier ordonnanceur de paquets utilisateur (107B) du premier ensemble d'ordonnanceurs de paquets utilisateur et le premier ordonnanceur de paquets de cellule partielle ; fournir des premières informations d'allocation de ressource ; établir un premier canal (102A) avec un premier utilisateur du premier groupe d'utilisateurs en utilisant les premières informations d'allocation de ressource, en échangeant des données entre un deuxième ordonnanceur de paquets utilisateur (107K) du deuxième ensemble d'ordonnanceurs de paquets utilisateur et le deuxième ordonnanceur de paquets de cellule partielle ; fournir des deuxièmes informations d'allocation de ressource et établir un deuxième canal (102B) avec un deuxième utilisateur du deuxième groupe d'utilisateur en utilisant les deuxièmes informations d'allocation de ressource.

15. Produit-programme informatique comprenant des instructions exécutables sur ordinateur destinées à réaliser les étapes du procédé selon la revendication 14 lorsqu'elles sont exécutées sur un ordinateur.
